# EUROPEAN PATENT APPLICATION

(11) **EP 2 059 044 A2**
(43) Date of publication of application: **13.05.2009**
(21) Application number: 08168632.1
(22) Date of filing: 07.11.2008
(51) Int. Cl.: H04N 7/173

(54) **Method and system for IPTV time shift processing**

(30) Priority: 07.11.2007 CN 200710166596; 05.05.2008 WO PCT/CN2008/070881
(71) Applicant: Huawei Technologies Co., Ltd., Longgang District, Shenzhen Guangdong 518129 (CN)
(72) Inventor: Yang, Jinchun, Guangdong 518129 (CN)
(74) Representative: Thun, Clemens

(57) **Abstract**

A method for IPTV time shift processing includes: receiving the play command of a UE after time shift occurs; adjusting the unicast rate of the UE according to the play command of the UE, so that the unicast progress is consistent with the multicast progress of the server after a certain time of unicast; transmitting the media stream corresponding to the play command to the UE through unicast; and when the unicast progress is consistent with the multicast progress, switching the media stream corresponding to the play command to the multicast mode for further transmission. With the invention, the play action of the user after time shift occurs can be resolved and the unicast rate of the user can be adjusted through the server. In this way, the unicast progress of the media stream becomes consistent with the multicast progress gradually, and finally, the unicast channel is removed to save bandwidth.

## Description

The present invention claims priority from the Chinese Patent Application No. 200710166596.2, entitled *Method and System for IPTV Time Shift Processing,* filed with the Chinese Patent Office on Nov. 7, 2007, and Application No. PCT/CN2008/070881, filed with the Chinese Patent Office on May. 5, 2008, which are incorporated herein by reference in its entirety.

### Field of the Invention

The present invention relates to communication technologies, and in particular, to a method and system for IPTV time shift processing.

### Background of the Invention

In the rapid development of communication technologies, Internet Protocol Television (IPTV) is popularized in the daily life of people. IPTV is an emerging technology that provides multiple interactive services such as digital TV for household users through a broadband cabled television network by integrating the Internet, multimedia and communication technologies. A user can enjoy the IPTV service through a User Equipment (UE), for example, may be a computer, or a network set top box (STB), or a mobile phone. IPTV caters for the trend of fast network development nowadays, and utilizes the network resources efficiently. IPTV is neither traditional analog cabled TV nor classical digital TV. Traditional and classical digital TV services are characterized by frequency division, fixed time and unidirectional broadcast. Classical digital TV makes many technical innovations as against analog TV, but only changes the form of signals, without changing the propagation mode of the media contents. IPTV uses the infrastructure of the broadband cabled TV network, may use the household TV set as a main terminal, and provides multiple digital media services such as TV programs through the Internet Protocol (IP). Therefore, IPTV is a totally new service form. It integrates traditional TV programs, Internet information services and value added services (VASs), and is a breakthrough for realizing a future digital home. With its development, IPTV will be accepted by users as a household entertainment and service center in the future. The architecture of IPTV decides this development direction.

In the IPTV service, the media contents are generally compressed and encoded to ensure a certain definition, and the encoded media still have a high bit rate. In order to save the transmission bandwidth, media streams are transmitted through the multicast technology. Sometimes, however, a user may pause or play backward and then press the Play key to continue when watching IPTV. To keep continuity of programs, the IPTV system treats the foregoing user action as a "time shift" operation.

In the prior art, the time shift operation is: preparing a set of video on demand (VOD) files, and the contents of the files are the same as the live broadcast contents. The live programs normally watched by a user are transmitted through the multicast technology. When the user requires time shift, the system converts the user request into a VOD request for accessing a specific location in a file. According to the breakpoint information in the user request, the system finds the corresponding location in the media file, and transmits the subsequent program streams to the user through the unicast technology.

This method is defective, the system bandwidth is consumed increasingly, and the system performance is deteriorated greatly.

### Summary of the Invention

The present disclosure is to provide a method and system for IPTV time shift processing so that the play of TV programs switches back to the multicast mode automatically without user operations, and solve the technical defect of the prior art, that is, the subsequent program streams to the user are transmitted through the unicast technology due to the "time shift"operation.

A method for IPTV time shift processing provided in an embodiment of the invention includes: receiving a play command of a User Equipment, UE, after time shift occurs; adjusting the unicast rate of the UE according to the play command of the UE if the play command is a normal play command subsequent to a command that leads to time shift, so that the unicast progress is consistent with a multicast progress after a certain time of unicast; transmitting a media stream corresponding to the play command to the UE through unicast with the adjusted unicast rate; and when the unicast progress is consistent with the multicast progress, switching the media stream corresponding to the play command to the multicast mode for further transmission.

A server for IPTV time shift processing provided in an embodiment of the invention includes a command processing module, a unicast processing module, and a multicast switching module. The command processing module is adapted to receive a play command of a UE when time shift occurs. The unicast processing module is adapted to adjust the unicast rate of the UE according to the play command if the play command is a normal play command subsequent to a command that leads to time shift, so that the unicast progress is consistent with a multicast progress after a certain time of unicast, and transmit the media stream requested by the UE to the UE through unicast. The multicast switching module is adapted to switch the media stream corresponding to the play command to the multicast mode for further transmission when the unicast progress is consistent with the multicast progress.

A system for IPTV time shift processing provided in an embodiment of the invention includes a server and at least one UE. The UE is adapted to send a play command to the server. The server is adapted to adjust the unicast rate of the UE according to a play command, so that the unicast progress is consistent with a multicast progress after a certain time of unicast; transmit a media stream corresponding to the play command to the UE through unicast; and when the unicast progress of the UE is consistent with the multicast progress, switch the media stream corresponding to the play command to the multicast mode for further transmission.

### It can be seen from the above technical solutions that:

In the prior art described above, the IPTV time shift is implemented in this way: After the user performs time shift, the server transmits streams continuously through the unicast technology. The subsequent operations of the user are specific to the VOD file, which means that the server needs to set up a unicast channel for each time shift UE. This method of the prior art is defective, because with the increase of time shift users, the system bandwidth is consumed increasingly, and the system performance is deteriorated greatly due to long-term existence of continuous unicast.

In the embodiments of the invention, the media stream of unicast progress can be consistent with the multicast progress gradually, and the further media stream transmission can be switched to the multicast progress ; thus, the IPTV time shift is processed.

### Brief Description of the Drawings

Figure 1 is a flowchart of the method for IPTV time shift processing in a first embodiment of the invention;
Figure 2 is a flowchart of the method for IPTV time shift processing in a second embodiment of the invention; and
Figure 3 shows the architecture of the system and the server for IPTV time shift processing in an embodiment of the invention.

### Detailed Description of the Invention

To make the present disclosure more apparent, the present disclosure will be described in detail with reference to the drawings and embodiments. It should be noted that the embodiments here are only for the purpose of illustration and are not intended to limit the present disclosure.

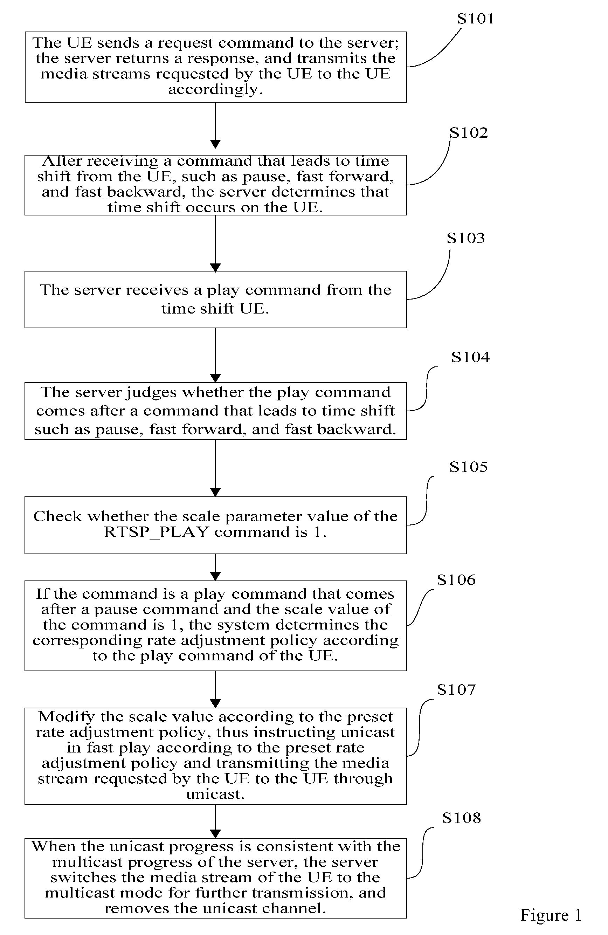

As shown in Figure 1, in the flowchart of the method for IPTV time shift processing in the first embodiment of the invention, the system determines a rate adjustment policy according to a combination of commands of the UE, and adjusts the current unicast rate according to the rate adjustment policy to make the unicast process consistent with the multicast process and switch to the multicast mode for further transmission. For example, if the user presses the Pause key and then presses the Play key, the system increases the transmission rate of the user properly to make the unicast process consistent with the multicast process. In the foregoing process, the UE, for example, may be a set top box (STB), a mobile phone, or a PC, is a terminal that supports IPTV. This embodiment of the invention includes the following steps:
Step S101: The UE sends a request command to the server; the server returns a response, and transmits the media streams requested by the UE to the UE accordingly.
Step S102: After receiving a command that leads to time shift from the UE, such as pause, fast forward, and fast backward, the server determines that time shift occurs on the UE.
Step S103: The server receives a play command from the UE which time shift occus.

For better understanding, one example of the commands in IPTV is described briefly below. The common protocol applied to IPTV request and response commands is Real Time Streaming Protocol (RTSP). An RTSP message consists of a message header and a message body. The message header defines the command name and some attributes related to the command. In the RTSP protocol, the pause operation is implemented through the RTSP_PAUSE command; the play operation is implemented through the RTSP_PLAY command, with the scale attribute being 1; the fast backward operation may also be implemented through the RTSP_PLAY command, with the scale attribute being a nonzero rational number, for example, scale = -3.5 means the UE requires fast backward at a 3.5 × speed.

Step S104: The server judges whether the play command comes after a command that leads to time shift such as pause, fast forward, and fast backward, that is, whether the RTSP_PLAY command is received after step S102.

Step S105: If the play command received by the server comes after a command that leads to time shift such as pause, fast forward or fast backward, it is necessary to check whether the scale parameter value of the play command is 1. Because the fast backward operation may also be implemented through the RTSP_PLAY command.

Step S106: If the scale parameter value of the RTSP_PLAY command is not 1, the user may have pressed the Fast Forward key or the Fast Backward key, and the system will adopt the default mode for processing. When the scale parameter value of the RTSP_PLAY command is 1, the system determines that the play command is a normal play command and selects a corresponding rate adjustment policy such as Normal play, Fast play, slow play and Intelligent play, according to the normal play command of the UE. In this way, the unicast progress can be consistent with the multicast progress of the server or other servers after a certain time of unicast.

For example, Table 1 shows the rate adjustment policies proposed in this embodiment of the invention.

**Table 1 Unicast rate adjustment policies**

| Rate Adjustment Policy | Characteristics | Implementation Method |
|---|---|---|
| Normal play | The server plays the media content at a normal speed. | The scale of the RTSP_PLAY command is 1. |
| Fast play | The media content is played at a constant speed that is a rational number. | The scale of the RTSP_PLAY command is a preset rational number. |
| Intelligent play | Catch up with the multicast progress in a preset time. | Unicast speed: The scale of the RTSP_PLAY command is: 1 + (current multicast media frame number - current unicast media frame number) / single-frame play time |

Step S107: Modify the scale value according to the preset rate adjustment policy, thus instructing unicast in fast play according to the preset rate adjustment policy and transmitting the media stream requested by the UE to the UE through the unicast. For example, if the rate adjustment policy is fast play and the scale value is 1.5, the media content is played fast at a 1.5 × speed in the unicast mode, where the setting of the scale value may not affect the user in watching the program.

Step S108: When the unicast progress is consistent with the multicast progress of the server, the server may switch the media stream corresponding to the play command to the multicast mode for further transmission, and removes the unicast channel.

The foregoing embodiment of the invention enables fast play of unicast according to the normal play command entered by the user, switches the media stream to the multicast mode for further transmission and removes the unicast channel when the unicast progress catches up with the multicast progress, and thus the bandwidth is saved and the system performance is improved.

Compared with the prior art, in the embodiment of the invention, the normal play command of the user received after time shift occurs is recognized and the necessity of adjusting the unicast rate according to the normal play command is determined. In this way, the unicast progress of the media stream can be consistent with the multicast progress gradually without affecting the user in watching the program, and finally, the unicast channel may be removed; thus, the bandwidth is saved and the system performance is improved..

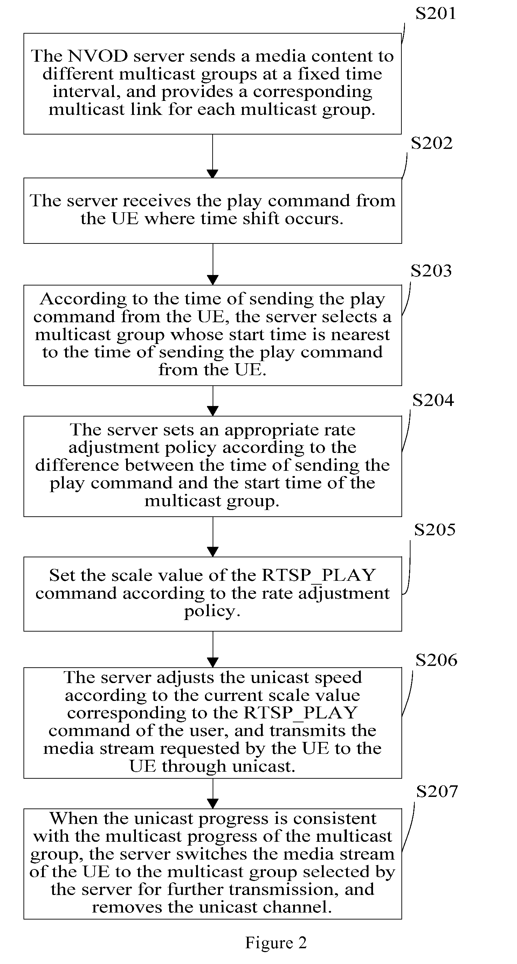

Figure 2 is a flowchart of the method for IPTV time shift processing in the second embodiment of the invention. In this embodiment, an appropriate multicast group is selected for the UE to join. For example, a multicast group, whose starting time is near to the time of sending the play command from the UE, may be sent by an NVOD server. In this way, the unicast time to be adjusted for the user may be short and little impact is imposed on the user.

Step S201: The NVOD server may send a media content to different multicast groups at a fixed time interval, and provides a corresponding multicast link for each multicast group. For the user, however, the server may only provide one media link of a specific media content to a user. The user clicks the media link through the UE and the server selects a multicast group for the user to join, and then the user accesses the media content through the multicast link corresponding to the multicast group.

Step S202: The server receives the play command from the UE where time shift occurs. Time shift may occur when the UE plays the media content, so the UE cannot keep up with the normal multicast progress. Therefore, the server needs to transmit the media requested by the UE through unicast.

Step S203: According to the time of sending the play command from the UE, the server selects a multicast group, for example, whose start time is near to the time of sending the play command from the UE. In this embodiment of the invention, for example, the specific process is: The server reads the current time (t) of receiving the play command from the UE, searches for the near start time (T), may be the nearest start time (T), among multicast groups. The search for the start time (T) of a multicast group may be performed through a fast search algorithm such as a binary search algorithm preferably. The server calculates the difference between the start time of the multicast group (T) and the current time of receiving the play command (t), for example, min|t-T|. The server determines the multicast group with, for example, the near start time, may be the nearest start time, according the difference between the start time of the multicast group (T) and the current time of receiving the command (t).

Here is another example of determining a multicast group. The server calculates the difference |t-T| between the start time of a multicast group (T) and the start time of the unicast that transmits the media streams to the UE (t). The server determines the multicast group with the near start time, may be the nearest start time, according the difference between the start time of the multicast group (T) and the start time of the unicast that transmits the media streams to the UE (t).

Step S204: The server sets an appropriate rate adjustment policy according to the difference between the time of sending the play command and the start time of the multicast group. Likewise, the rate adjustment policies in this embodiment also include normal play, slow play, fast play and intelligent play. By setting a rate adjustment policy, the server achieves consistency between the unicast progress and the multicast progress of the server after a certain time of unicast.

Step S205: Set the scale value of the RTSP_PLAY command according to the rate adjustment policy. The specific process may be: First, check whether the difference between the start time of the multicast group (T) and the current time of receiving the command (t). If t-T is positive, the play time of the user is earlier than the start time of the determined multicast group, and the scale may be set to a negative value to slow down the play speed of the unicast. If t-T is negative, the play time of the user is later than the determined time of starting play of the multicast group, and the scale may be set to a positive value to speed up the unicast.

Step S206: The server adjusts the unicast speed according to the current scale value corresponding to the RTSP_PLAY command of the user, and transmits the media stream requested by the UE to the UE through unicast.

Step S207: When the unicast progress is consistent with the multicast progress of the multicast group, the server switches the media stream of the UE to the multicast group selected by the server for further transmission, and removes the unicast channel.

In the foregoing embodiment of the invention, for example, the server selects a multicast group upon receiving a play command from the user, and adjusts the unicast speed according to the difference between the multicast group starting time and the uesr play command sending time. In this way, the unicast progress becomes consistent with the multicast progress without user operations, and the media stream may be switched to the multicast mode for further transmission.

In order to save the bandwidth and improve the system performance, the unicast channel may be removed after the media stream is switched to the multicast mode for further transmission.

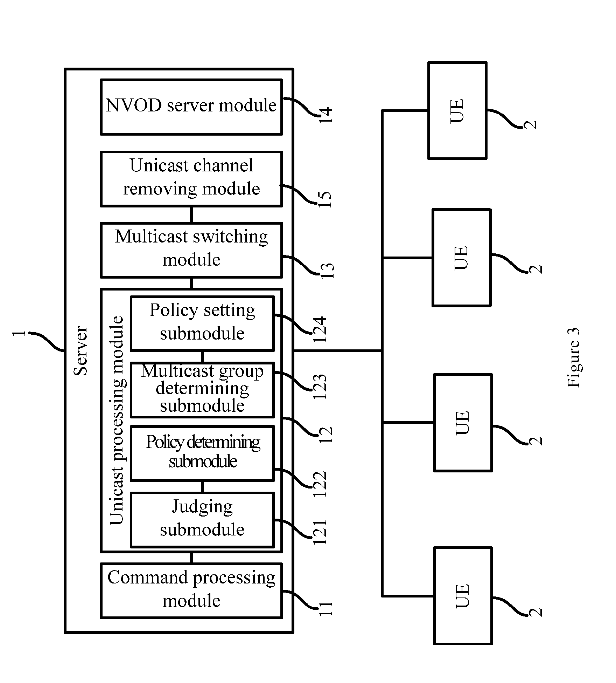

As shown in Figure 3, a system for IPTV time shift processing provided in an embodiment of the invention includes: a server 1 and at least one UE 2. The UE 2 is adapted to send a play command to the server 1. The UE 2, for example, may be an STB, a mobile phone or a PC that supports IPTV. The server 1 is adapted to adjust the unicast rate of the UE 2 according to the play command sent by the UE 2, so that the unicast progress is consistent with the multicast progress of the server 1 after a certain time of unicast; transmit the media stream corresponding to the play command to the UE 2 through unicast; and when the unicast progress of the UE 2 is consistent with the multicast progress, switch the media stream corresponding to the play command to the multicast mode for further transmission.

The system for IPTV time shift processing in the foregoing embodiment of the invention resolves the normal play command entered by the user and determines the necessity of adjusting the unicast rate according to the normal play command. In this way, the unicast progress may become consistent with the multicast progress.

In order to save bandwidth, the unicast channel may be removed after the media stream is switched to the multicast mode for further transmission.

Also shown in Figure 3, the server 1 includes a command processing module 11, a unicast processing module 12 and a multicast switching module 13. The command processing module 11 is adapted to receive a play command of the UE 2 where time shift occurs. The unicast processing module 12 is adapted to: if the play command is a normal play command subsequent to a command that leads to time shift, adjust the unicast rate of the UE 2 according to the play command received by the command processing module 11 so that the unicast progress is consistent with a multicast progress, for example, may be the multicast progress of the server 1, after a certain time of unicast, and transmit the media stream requested by the UE 2 to the UE 2 through unicast. The multicast switching module 13 is adapted to switch the media stream corresponding to the play command to the multicast mode for further transmission when the unicast progress is consistent with the multicast progress of the server 1.

The unicast processing module 12 includes a judging submodule 121 and a policy determining submodule 122. The judging submodule 121 is adapted to judge whether the play command is a normal play command subsequent to a command that leads to time shift, for example, pause, fast forward, and fast backward. The policy determining submodule 122 is adapted to determine a rate adjustment policy according to the play command of the UE 2 when the judging submodule 121 determines that the command is a play command subsequent to a command that leads to time shift; and adjust the unicast rate of the UE 2 according to the rate adjustment policy so that the unicast progress is consistent with a multicast progress, for example, may be the multicast progress of the server 1, after a certain time of unicast.

The server 1 further includes an NVOD server module 14, which is adapted to send the same media stream to different multicast groups at a time interval, for example, may be at a fixed time interval.

The unicast processing module 12 includes a multicast group determining submodule 123 and a policy setting submodule 124. The multicast group determining submodule 123 is adapted to select a multicast group whose start time is near to, for example, may be nearest to, the time of sending the play command from the UE 2. The policy setting submodule 124 is adapted to set the rate adjustment policy according to the start time of the selected multicast group and the time of receiving the play command, and adjusts the unicast rate for the UE 2.

The server 1 further includes a unicast channel removing module 15, which is adapted to remove the unicast channel after the multicast switching module 13 switches the media stream of the UE 2 to the multicast mode for further transmission.

The embodiments as well as the features of such embodiments described above can be combined if they do not exclude each other.

It is understandable to those skilled in the art that all or part of the steps of the preceding embodiments can be implemented by hardware following instructions of programs. The programs may be stored in a computer-readable storage medium. When the programs are executed, the steps of the foregoing embodiments are executed, and the storage medium may be any medium that can store program codes such as read-only memory (ROM), random access memory (RAM), magnetic disk and compact disk.

After study of the above embodiments, technicians in this field should understand that the invention may be realized through software and general hardware platforms or through hardware. Accordingly, the technical scheme provided in embodiments of the invention or contributions to the prior art can be embodied in software products. The software is stored in a storage medium and incorporates several instructions to instruct a computer device, for example, a PC, a server, or a network device, to execute the method provided in the embodiments of the present invention.

Although the invention has been described through some exemplary embodiments, the invention is not limited to such embodiments. Any modification, equivalent substitution, and improvement without departing from the disclosure should be covered in the scope of protection of the invention.

## Claims

1. A method for time shift processing, **characterised in**, comprising:
receiving a play command of a User Equipemt, UE, after time shift occurs;
adjusting the unicast rate of the UE if the play command is a normal play command subsequent to a command that leads to time shift, according to the normal play command of the UE, so that the unicast progress is consistent with a multicast progress after a certain time of unicast;
transmitting a media stream corresponding to the play command to the UE through unicast with the adjusted unicast rate; and
switching the media stream corresponding to the play command to the multicast mode for further transmission, if the unicast progress of the UE is consistent with the multicast progress.

2. The method for time shift processing according to claim 1 , **characterised in that** the step of adjusting the unicast rate of the UE comprises:
determining a corresponding rate adjustment policy according to the play command of the UE;
modifying the unicast rate of the UE according to the rate adjustment policy.

3. The method for time shift processing according to claim 1, **characterised in that** the step of adjusting the unicast rate of the UE comprises:
selecting a multicast group whose start time is near to the time of sending the play command from the UE;
setting a rate adjustment policy according to the difference between the time of sending the play command and the start time of the multicast group;
adjusting the unicast speed of the UE according to the rate adjustment policy; and
the step of switching the media stream corresponding to the play command to the multicast mode for further transmission comprises:
switching the media stream corresponding to the play command to the selected multicast group for further transmission.

4. The method for time shift processing according to claim 3, **characterised in**, the step of selecting a multicast group comprising:
selecting a multicast group whose start time is near to the time of sending the play command from the UE.

5. The method for time shift processing according to claim 2 or claim 3, **characterised in that** the rate adjustment policy comprises at least one of the Normal play, fast play, slow play and Intelligent play.

6. The method for time shift processing according to claim 5, **characterised in that** the rate adjustment policy of the Intelligent play comprising:
Adjusting the unicast speed by setting the scale of the RTSP_PLAY command as : 1 + (current multicast media frame number - current unicast media frame number) / single-frame play time, in order to catch up with the multicast progress in a preset time.

7. The method for time shift processing according to any one of claims 1-6, **characterised in that**, after switching the media stream corresponding to the play command to the multicast mode for further transmission, the method further comprises:
removing the unicast channel.

8. A server for time shift processing, **characterised in**, comprising:
a command processing module (11), adapted to receive a play command of a User Equipment, UE, when time shift occurs;
a unicast processing module (12), adapted to adjust the unicast rate of the UE according to the play command if the play command is a normal play command subsequent to a command that leads to time shift, so that the unicast progress is consistent with a multicast progress after a certain time of unicast, and transmit the media stream requested by the UE to the UE through unicast ; and
a multicast switching module (13), adapted to switch the media stream corresponding to the play command to the multicast mode for further transmission when the unicast progress is consistent with the multicast progress.

9. The server for time shift processing according to claim 8, **characterised in that** the unicast processing module comprises:
a judging submodule (121), adapted to judge whether the play command is a normal play command subsequent to a command that leads to time shift;
a policy determining submodule (122), adapted to determine a rate adjustment policy according to the play command of the UE when the judging submodule determines that the command is a normal play command subsequent to a command that leads to time shift; and adjust the unicast rate of the UE according to the rate adjustment policy so that the unicast progress is consistent with the multicast progress after a certain time of unicast.

10. The server for time shift processing according to claim 8, **characterised in that** the unicast processing module further comprises:
a multicast group determining submodule (123), adapted to select a multicast group;
a policy setting submodule (124), adapted to set a rate adjustment policy according to the start time of the selected multicast group and the time of receiving the play command, and adjusts the unicast rate for the UE according to the rate adjustment policy.

11. The server for time shift processing according to claim 8, **characterised in**, further comprising:
a unicast channel removing module (15), adapted to remove the unicast channel after switching the media stream of the UE to the multicast mode for further transmission.

12. A system for time shift processing, **characterised in**, comprising:
a server according to any one of claims 8-11;
at least one User Equipment, UE, adapted to send a play command to the server and receive media stream from the server.

13. A computer program product, **characterised in**, comprising computer program code, which, when executed by a computer module, will cause the computer module to perform the steps according to any one of claims 1-7.
